# EUROPEAN PATENT APPLICATION

(11) **EP 2 487 888 A1**
(43) Date of publication of application: **15.08.2012**
(21) Application number: 11153026.7
(22) Date of filing: 02.02.2011
(51) Int. Cl.: H04M 3/32, H04W 24/08

(54) **A system for detection of a bypass of an interconnect to a telecommunication network**

(71) Applicant: Meucci Solutions NV, 9050 Gent-Ledeberg (BE)
(72) Inventor: Van der Meeren, Guy, 9052 Zwijnaarde (Gent) (BE)
(74) Representative: Plas, Axel Ivo Michel

(57) **Abstract**

There is described a system (1) for detection of a bypass (540, 840) of an interconnect (30) to a telecommunication network (50, 80), said system (1) comprising:
• means (10) adapted to originate a test call to said telecommunication network (50) under test from outside the telecommunication network (50) under test;
• at least one receiver probe (20) with a subscription for terminating said test call; and
• a control system (40) configured to:
o initiate the test call;
o receive from the receiver probe (20) call information comprising a received calling line identification (CLI) of the test call; and
o analyse the received calling line identification (CLI) such that presence of the bypass (540, 840) can be detected,

According to the invention said subscription is configured with calling line identification restriction override (CLIRO).

## Description

### Field of the lnvention

The present invention generally relates to a system for detection of an interconnect bypass in telecommunication networks, especially in wireless telecommunication networks such as for example of the type GSM, UMTS or similar, but also in wired telecommunication networks.

### Background of the lnvention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess technical reliability and the quality of service of the interconnection facility so that the agreed upon or regulatory standards are met. Next to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of another network operator than the receiving operator or because the calling party is abroad and is making use of a partnering network operator that provides roaming services for its network operator, this call has to pass through the interconnection facility.

Sometimes there are attempts to bypass the interconnection facilities of the network operator in an attempt to make money by avoiding at least a part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator.

This leads to a direct loss of revenue for the receiving network operators and this leads to technical problems. First of all as the bypass operator uses end user facilities to provide a network interconnection. Furthermore the use of these end user facilities and the setup of a new call creates an additional interface. Therefor there is a serious risk of quality problems such as degraded quality of audio or data transmissions, interruptions during the call, a prolonged waiting time during the call initiation, unacceptable delays in the transmissions, .... Further, because of the bypass operators reroute the call by setting up a new call making use of end user facilities of the receiving operator, the CLI of the calling party will be replaced with the CLI of the new call. This leads to inconveniences for the receiving parties which receive an erroneous or no CLI, but can also have more serious safety issues involved when a call to emergency services or police is involved. Furthermore this also creates serious technical difficulties for automatic telephone switchboards that operate on the basis of the CLI of the incoming call.

A system for setting up test calls in a telecommunication network is known from for example WO99/01974 and WO2008/071857. These call charge verification systems generate a series of calls between different sites on one or more networks to enable the network operator to check the billing procedure of the network. These systems however rely on collection of billing data produced by the operator in order to extract data, such as for example the CLI for analysis. Therefor these systems require access to sensitive data of the telecommunication network operator. This data is sensitive because it is related to the calling behaviour of its customers which might be subjected to privacy regulations or because it relates to billing information which is considered as commercial know how of the telecommunication network operator. These problems are especially relevant if the call charge verification system is operated by third parties that offer such system as a service to the telecommunication network operator. As then extensive access by these third parties to information of the telecommunication network operator requires specific interfaces to be developed to provide access to the billing information for each specific telecommunication network operator. This is time and resource intensive and makes it difficult to scale the verification system to multiple telecommunication network operators.

A known system that overcomes the abovementioned drawbacks is the Meucci system as described on their website: http://www.meucci-solutions.com . This system for detection of a bypass of an interconnect to a telecommunication network under test comprises means adapted to originate a test call to said telecommunication network under test from outside the telecommunication network under test and at least one receiver probe with a subscription for terminating said test call. Further this system comprises a control system configured to initiate the test call; receive from the receiver probe call information comprising a received calling line identification (CLI) of the test call; and analyse the received calling line identification (CLI) such that presence of the bypass can be detected. The Meucci system does not require an interface with the billing system. However in this case difficulties can arise for detecting and disabling a bypass when the bypass operator makes use of the CLIR function in order to mask the calling line identification of the subscriptions used in their bypass equipment as will be explained in further detail below.

As such there is a need for a system that can provide real time information about the availability of a bypass. This system should be able to be operated by third parties and should not require access to sensitive data of the telecommunication network operator nor should it require the interfaces to enable such access. The system should also allow identification and/or disabling of one or more subscriptions used in the bypass, even if the bypass operator makes use of the CLIR function in order to mask the calling line identification of the subscriptions used in their bypass equipment.

### Summary of the lnvention

According to a first aspect of the invention there is provided a system for detection of a bypass of an interconnect to a telecommunication network, said system comprising:
- means adapted to originate a test call to said telecommunication network under test from outside the telecommunication network under test;
- at least one receiver probe with a subscription for terminating said test call; and
- a control system configured to:
   o initiate the test call;
   o receive from the receiver probe call information comprising a received calling line identification (CLI) of the test call; and
   o analyse the received calling line identification (CLI) such that presence of the bypass can be detected,
   CHARACTERISED IN THAT said subscription is configured with calling line identification restriction override (CLIRO).

This advantageously enables a simple and robust system for detection of a bypass that is able to detect a bypass even if the bypass operator makes use of a calling line identification restriction (CLIR) function in order to hide the CLI from detection. This enables to identify and subsequently disable the subscriptions that are being used in a bypass even if the bypass operator makes use of the CLIR function. When third parties provide the system for detection of a bypass as a service to a telecommunication network operator this requires neither access to sensitive data like for example billing date nor complex technical interfaces to provide that access. The third party only requires a subscription configured with CLIRO for terminating the test call.

This system further does not require complex computations nor extensive amounts of data to be able to detect the existence of a bypass. It only needs to analyse the received calling line identification (CLI). The analysis can be implemented in a simple manner, such as for example determining whether the received CLI is from a call that originated from within the telecommunication network under test by analysing the prefix of the received CLI for the presence of a prefix belonging to the numbering plan of the telecommunication network under test.

According to an embodiment of the invention the presence of the bypass can be detected if the received calling line identification differs from the calling party number associated with the means adapted to originate the test call.

This comparison allows detection of a bypass by means of a simple comparison.

According to an alternative embodiment the presence of the bypass can be detected if the received calling line identification belongs to a subscription of said telecommunication network under test. This can for example be implemented by checking if the received calling line identification (CLI) comprises a prefix which belongs to the numbering plan of said telecommunication network under test or alternatively by checking if the received calling line identification (CLI) comprises a number which is comprised in the number database of said telecommunication network under test.

This is a simple and reliable way to detect the presence of a bypass uses subscriptions of the network under test.

According to still a further embodiment of the invention the presence of the bypass can be detected if the received calling line identification (CLI) comprises the same country code as the country code associated with said telecommunication network under test.

This allows for a fast and flexible detection that requires little computing power and a low amount of data to be transferred to the control system.

Optionally in the latter case the bypass can be detected if the received calling line identification (CLI) belongs to a subscription to a telecommunication network other than said telecommunication network under test.

As such a reliable detection of a bypass located outside the network under test becomes possible.

According to a second aspect of the invention there is provided a method for detecting a bypass of an interconnect to a telecommunication network under test, said method comprising the steps of:
- the means originating a test call to said telecommunication network under test from outside the telecommunication network under test;
- the at least one receiver probe with a subscription terminating said test call; and
- a control system initiating the test call; receiving from the receiver probe call information comprising a received calling line identification (CLI) of the test call; and analysing the received calling line identification (CLI) such that presence of the bypass can be detected,
CHARACTERISED IN THAT said subscription is configured with calling line identification restriction override (CLIRO).

According to an embodiment said method further comprises the steps of initiating, originating, receiving and analysing a plurality of test calls between a plurality of means and a plurality of predetermined receiver probes.

According to a further embodiment said method further comprising the steps of:
- a scan phase wherein a first amount of the plurality of test calls is initiated at a first rate thereby identifying a bypass; and
- a shoot phase wherein a second amount of the plurality of test calls is initiated at a second rate only using predetermined means and predetermined receiver probes that are capable of passing through the bypass identified in the scan phase, the second amount and rate being higher than the first amount and rate respectively.

### Brief Description of the Drawings

Fig. 1 illustrates an embodiment according to the invention without the presence of a bypass;

Fig. 2 illustrates the embodiment according to Figure 1 with the presence of a bypass;

Figures 3 to 5 illustrate a further embodiment according to the invention with the presence of a bypass.

### Detailed Description of Embodiment(s)

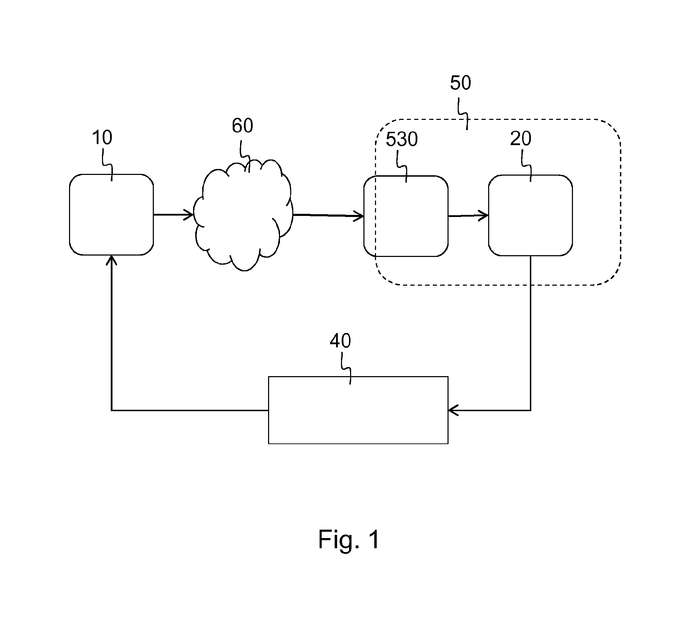

Figure 1 shows a system 1 for detection of a bypass of an interconnect 530 to a telecommunication network 50 under test. The system 1 according to the invention comprises a means 10 to originate a test call to said telecommunication network 50 under test from outside the telecommunication network 50 under test. This means 10 can be a suitable sender probe such as for example a GSM mobile phone or any other type of device capable of initiating a call on a predetermined outside telecommunication network other than the telecommunication network 50 of the network operator that is undertaking the investigation regarding the presence of a bypass of an interconnect 530, such as for example calling cards, a telephone number providing acces to voip systems, call back mechanisms, any type of pc originating calls, a suitable subscription to mobile networks such as for example a SIM card, wireline networks or call generators directly connected to telecommunication network equipment. The means 10 can comprise for example a fixed line subscription in the UK "+44 20 1234 5678" and the telecommunication network 50 under test can for example be a telecommunication network of a Belgian mobile operator with a numbering plan with a 474 prefix, this means "+32 474 xxx xxx". The means 10 is for this purpose connected to a suitable control system 40 which enables to initiate the test call according to instructions received from this control system 40. The control system 40 is for example a suitably programmed computer that is directly connected to the means 10, but it might also be a remote computer system that is connected to the means 10 by means of a suitable network interface, such as for example a LAN or the internet, to enable exchange of instructions and/or data through this networks. It is clear that the system 1 for detection of a bypass is not limited to a system with only one means 10, it can however comprise any suitable number of means 10 dispersed among any suitable number of outside telecommunication networks, such as for example eight means 10 for different telecommunication networks in France and three means 10 for roaming telecommunication network partners in Ghana.

As can be seen in Figure 1 the bypass detection system 1 also comprises a receiver probe 20. This receiver probe 20 can for example also be a GSM mobile phone or any other type of device with a subscription for terminating the test call. The receiver probe 20 can for example comprise a subscription to the telecommunication network 50 under test "+32 474 123 456". The receiver probe 20 is also connected to a suitable control system 40. The control system 40 receives from the receiver probe 20 call information comprising a received calling line identification (CLI) of the test call. It is clear that the system 1 is also not limited to a system with only one receiver probe 20. It can comprise any suitable number of receiver probes 20 with a subscription for terminating test calls.

The call information comprises a received CLI of the test call and optionally other data relating to the call such as for example the time and date the test call was exactly received, the time and date at which the test call started ringing, the time and date at which the test call was terminated, an indicator for whether the test call was picked up, the phone number associated with the means 20, the presentation indicator, ....

As shown in Figure 1 when no bypass is present the control system 40 initiates the test call by activating the means 10 which subsequently originates the test call by calling the subscription to the telecommunication network 50 under test in the receiver probe 20. The test call is then sent to the telecommunication network 50 under test, for example optionally via one or more carriers 60. Subsequently the test call passes interconnect 530 of the telecommunication network 50 under test who routes the test call to the receiver probe 20. The receiver probe 20 then receives the incoming test call. It is not required for the receiver probe 20 to actually answer the test call. The control system 40 could for example be configured in such a way that it instructs means 10 to initiate the test call to the receiver probe 20 and to automatically disconnect the test call after allowing three rings. The control system 40 then receives from the predetermined receiver probe 20 call information that comprises a received CLI, which is transmitted just before or after the first ring, and optionally other data concerning the test call. This could be done for example by downloading the call information from the receiver probe 20 to the control system 40 or by transmitting it to the control system 40 in any suitable way, by for example a wired or wireless connection means. The control system 40 then analyses the received CLI.

This analysis can be executed as a simple comparison with the calling party number associated with means 10 that the control system 40 instructed to initiate the test call. In the case illustrated in Figure 1 where the test call passed through the interconnect facility 530 this received CLI, for example "+44 20 1234 5678", will match the calling party number, "+44 20 1234 5678", associated with means 10 and the control system 40 will be able to determine that for this test call no bypass was detected.

As the means 10 originates the test call from outside the telecommunication network 50 under test, the analysis can be done with even more reduced complexity and increased reliability. It can be determined whether the received CLI is a call that originated from within the telecommunication network 50 under test, this means an on net call, by for example analysing whether the prefix of the received CLI differs from the prefix associated with the numbering plan of the telecommunication network 50 under test. lf this analysis of the received CLI indicates the calling party of the test call is not from within the telecommunication network under test, no bypass was detected. Thus as soon as the analysis is able to ascertain that the received CLI does not belong to the numbering plan associated with the telecommunication network 50 under test, no bypass within the network under test was detected. In order to also take into account number portability the analysis could comprise a check if the received CLI comprises a number which is comprised in the number database of the telecommunication network 50 under test. If this is not the case, no bypass within the network under test was detected. In general, because the means 10 originates the test call from outside the telecommunication network 50 under test, the presence of a bypass can be detected if the received CLI belongs to a subscription to the telecommunication network 50 under test.

Another possibility for analysis is to check if the received CLI comprises the same country code as the country code associated the telecommunication network 50 under test. As the means 10 in many cases originates a test call from a country other than the one from the telecommunication network 50 under test this provides a tool for determining whether a bypass is present.

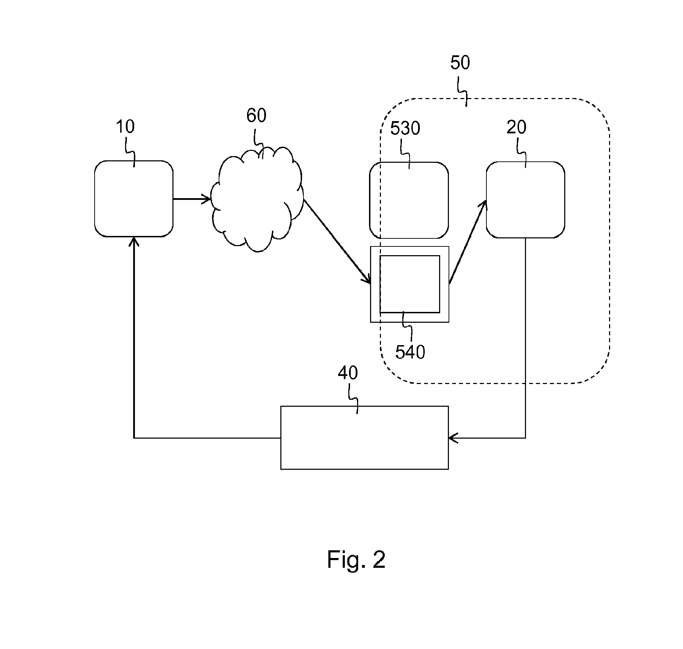

Figure 2 shows the same system 1 according to Figure 1 in operation, but now there is a bypass 540 in place and this bypass 540 reroutes the test call. When the control system 40 now initiates a test call between means 10 and receiver probe 20 and the call is rerouted optionally via one or more carriers 60 to the bypass 540 a detection of the bypass 540 is possible as explained below.

Such a bypass 540, also known as for example a GSM gateway or SIM box when it concerns a wireless telecommunication network or a leaky PBX when it concerns a wired telecommunication network, is operated by interconnection bypass operators that route part of the traffic to the telecommunication network 50 under test from outside telecommunication network 50 via for example a suitable internet interface with one of the carriers 60 towards a bypass 540 which normally makes use of a plurality of subscriptions, for example "+32 474 111 222", that operate within the telecommunication network 50 under test and which convert the incoming test call into a new call originating from a subscription to the telecommunication network 50, "+32 474 111 222", and to the same destination and as such bypass the interconnect 530. However when the control system 40 now receives the receiver call information from the receiver probe 20 that received the test call initiated from means 10, the received CLI, "+32 474 111 222" will not match the calling party number, "+44 20 1234 5678", associated with means 10. This is because instead of the calling party number of means 10, the calling party number of one of the subscriptions in the bypass 540, "+32 474 111 222", will be in the CLI received by receiver probe 20. The control system 40 is then able to assess that a bypass 530 is present.

As explained above because the means 10 originates the test call from outside the telecommunication network 50 under test, the presence of a bypass 540 can be detected if the received CLI belongs to a subscription to the telecommunication network 50 under test. This can be implemented by checking whether the received CLI comprises a prefix which belongs to the numbering plan of the telecommunication network 50 under test "+32 474 xxx xxx" or when to also take into account number portability by checking whether the received CLI comprises a number which is comprised in the number database of the telecommunication network 50 under test.

When the bypass 540 operator makes use of the CLIR function the system 1 would not be able to guarantee the detection of the presence and/or subsequent disabling of a bypass 540. The signals exchanged between telecommunication networks or within one telecommunication network when setting up a call namely comprise two fields, a CLI field which contains the calling party telephone number and a presentation indicator (PI) which indicates whether the CLI can be shown or not. The PI has three states: "available" means that there is a CLI and it can be shown, "unavailable" means that there is no CLI present and "restricted" means that there is a CLI present, but it cannot be shown to the destination subscription. When the bypass 540 operator enables the CLIR function for the subscriptions the bypass 540 makes use of, all calls from those subscriptions will be provided with a PI set to "restricted" and the last switch in the path will not pass on the CLI to the terminating subscription used in the receiver probe 20. A more detailed description of the CLIR function can for example be found in the ITU CCITT l.251.4 specification or the 3GPP TS 24.081 specification.

Therefore the system according to the invention makes use of a receiver probe 20 that comprises a subscription to the telecommunications network 50 under test configured with a calling line identification restriction override (CLIRO) function. This is a feature implemented in the equipment of the telecommunication network 50. The feature will typically instruct the final switch in the path of the test call to ignore the PI if it is set to "restricted" and still pas on the CLI to the terminating subscription of the receiver probe 20. Then, even if the bypass 540 makes use of a CLIR function the receiver probe 20 will always be able to detect the CLI of the incoming test call. This will enable the system 1 to detect and/or subsequently disable the specific subscriptions that are in use in the bypass 540.

In general the method for detecting the bypass 540 of the interconnect 530 to a telecommunication network 50 under test comprises the following steps:
- the means 10 originate the test call to said telecommunication network 50 under test from outside the telecommunication network 50 under test;
- the at least one receiver probe 20 with a subscription configured with CLIRO terminates said test call; and
- the control system 40 initiates the test call; receives from the receiver probe 20 call information comprising a received CLI of the test call; and analyses the received CLI such that presence of the bypass 540 can be detected.

In order to continuously monitor the telecommunication network 50 under test for the existence of a bypass 540 for its interconnects 530 with outside telecommunication networks the system 1 can initiate, originate, receive and analyse a plurality of test calls between a plurality of means 10 and a plurality of receiver probes 20. These receiver probes 20 each comprise a respective subscription to the telecommunication network 50 under test. Upon receiving from the plurality of receiver probes 20 the respective received CLI of the test calls, the control system 40 will analyse the respective received CLI as described above in order to detect the presence of a bypass 540.

As still a further refinement in order to allocate more resources of the system 1 to certain routes towards the telecommunication network 50 under test where the risk for bypass systems 540 is higher, it is advantageous for the control system to initiate first a scan phase wherein a relatively low amount of test calls is initiated at a first rate, for example fifty calls at a rate of five test calls per day, in order to identifying suspect routes with an interconnect bypass. The control system 40 subsequently initiates a shoot phase wherein a higher amount of test calls is scheduled at a second rate, for example one thousand test calls at a rate of ten test calls per hour, only on these identified suspect routes. This then enables to identify as fast as possible as many as possible of the subscriptions used by the bypass 540 operating on these suspect routes in order to allow for subsequent disabling of these subscriptions.

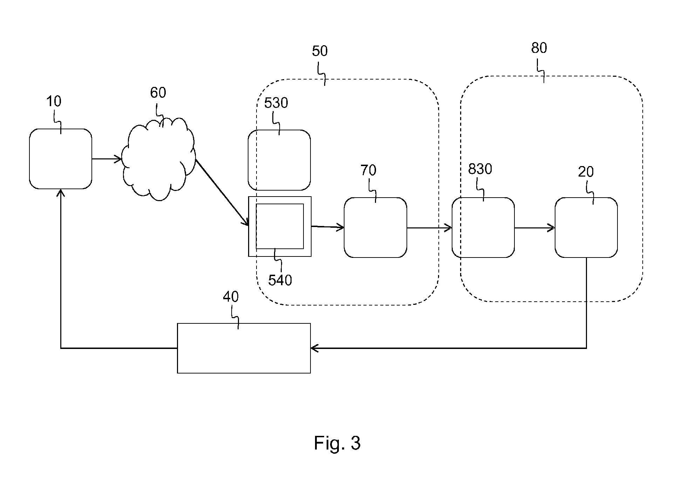

It is not essential that the subscription configured with the CLIRO is comprised within the telecommunication network 50 under test as can be seen in the embodiment of the invention illustrated in Figure 3. In this case the receiver probe 20 comprising the subscription with CLIRO forms part of a telecommunication network 80 different from the telecommunication network 50 under test. This could be for example because for the telecommunication network 50 under test there was no subscription with CLIRO available. In this case when a test call is initiated by the control system 40, means 10 originates a test call to a subscription 70 within the telecommunication network 50 under test. This subscription 70 however forwards the test call, via the interconnect 830 of telecommunication network 80, to the receiver probe 20 for terminating the test call, for example by putting the subscription 70 in unconditional forward mode. In this case similar as in Figure 2 the received CLI is provided by the receiver probe 20 to the control system for analysis even if the bypass 540 makes use of CLIR because the receiver probe 20 is provided with a subscription with CLIRO. Also in this case a similar analysis as in the embodiment in Figures 1 and 2 will enable detection of the bypass 540.

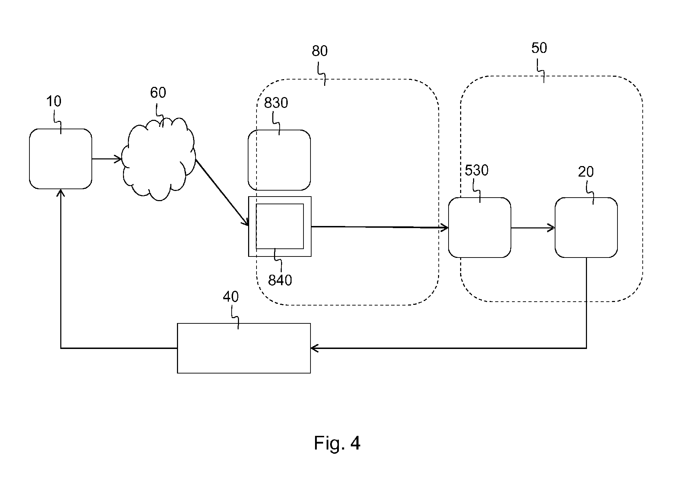

Figure 4 shows an alternative embodiment of the system 1 according to the invention. In this scenario the control system 40 initiates a call through the use of means 10 from outside the telecommunication network 50 under test to the receiver probe 20 with a CLIRO subscription to the telecommunication network 50 under test. In this case the call is routed, optionally via one or more carriers 60, to a bypass 840 that makes use of subscriptions to telecommunication network 80 other than the telecommunication network 50 under test. The bypass 840 converts the incoming test call into a new call originating from a subscription to the telecommunication network 80 to the same subscription in receiver probe 20. Telecommunication network 80 then routes the test call to the interconnect 530 of the telecommunication network 50 under test and subsequently the test call gets terminated on receiver probe 20 with a CLIRO subscription. The bypass 840 in this way bypasses the interconnect 830 from this telecommunication network 80. The control system 40 then receives the call information related to this test call from the receiver probe 20 and starts analysing the received CLI in order to determine the presence of the so called 'other operator' bypass 840. Normally this scenario only occurs when the telecommunication network 50 under test and the telecommunication network 80 are in the same country. Therefore also in this embodiment a simple analysis of the country code of the received CLI or alternatively an analysis whether the received CLI comprises a prefix which belongs to the numbering plan associated with the telecommunication network 80 other than the telecommunication network 50 under test would enable the control system 40 to detect the bypass 840. Generally the bypass 840 can be detected if the received CLI belongs to a subscription to a telecommunication network 80. In this case the operator of the telecommunication network 50 under test receive an interconnect charge from the operator of network 80 because his interconnect 30 is used, but all the above mentioned quality problems associated with the presence of a bypass are also present in this embodiment.

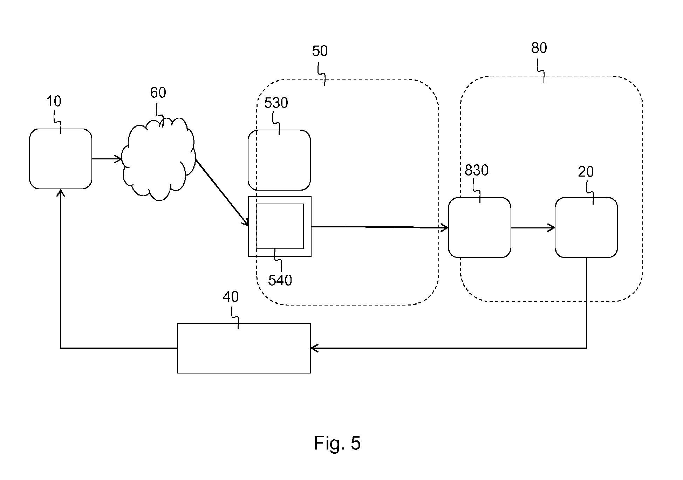

Figure 5 shows a further embodiment of the system 1 according to the invention. It is clear that the situation in the embodiment of Figure 5 is analogous to the embodiment of Figure 4, but here the bypass 540 makes use of subscriptions to the telecommunication network 50 under test and the receiver probe is located in the telecommunication network 80 other then the telecommunication network 50 under test. This is a situation that can for example arise if there are available in the telecommunication network under test 50 subscriptions with retail rates that are lower than the interconnection rate to the other telecommunication network 80. After receiving from the receiver probe 20 the received CLI the control system 40 can start the analysis in order to ascertain the presence of a so called 'off net' bypass 540. As explained above also in this embodiment a simple and robust analysis can be performed by when a portion of the CLI that is indicative of the telecommunication network 50, the control system 40 would be able to ascertain the presence of a bypass 540 if this portion is present in the CLI, because for the bypass 540 to bypass the interconnection 530 of the telecommunication network 50 under test, in this embodiment, it operates with subscriptions to this telecommunication network 50 under test. Another possibility for analysis by the control system 40 could be to check whether the received CLI belongs to the number database associated with the telecommunication network 50 under test as this would then allow to take into account number portability. Also in this embodiment a simple analysis of the country code of the received CLI or alternatively an analysis whether the received CLI comprises a prefix which belongs to the numbering plan associated with the telecommunication network 50 under test would enable the control system 40 to detect the bypass 540 because for the bypass 540 to bypass the interconnection 530 of the telecommunication network 50 under test, in this embodiment, it operates with subscriptions to this telecommunication network 50 under test. Generally the bypass 540 can be detected if the received CLI belongs to a subscription to a telecommunication network 50.

It is clear that the control system 40 and the telecommunication network under test 50 can be located in the same country or could be in a different country. Receiver probe 20 and telecommunication network under test 50 are normally in the same country, although in case of a mobile telecommunication network under test 50, probe 20 could be located outside this telecommunication network 50 under test with the CLIRO subscription to the telecommunication network under test 50 thus roaming on another network in another country. It is further also possible that the control system 40 is formed as a central system located on one site or alternatively as a geographically distributed system, in this case functionality of control system 40 could for example be located within the receiver probe 20 or within the means 10. It is also clear that the control system 40 analyses the CLI information obtained through the CLIRO subscription

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof.

As such, for example, the embodiment shown in Figure 5 can be further elaborated with the concept shown in Figure 3 if for example no subscription with CLIRO would be available in telecommunication network 80. It is further not essential for the telecommunication network 50 under test and the telecommunication network 80 to be in the same country.

The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (1) for detection of a bypass (540, 840) of an interconnect (530, 830) to a telecommunication network (50, 80), said system (1) comprising:
• means (10) adapted to originate a test call to a telecommunication network (50) under test from outside the telecommunication network (50) under test;
• at least one receiver probe (20) with a subscription for terminating said test call; and
• a control system (40) configured to:
o initiate the test call;
o receive from the receiver probe (20) call information comprising a received calling line identification (CLI) of the test call; and
o analyse the received calling line identification (CLI) such that presence of the bypass (540, 840) can be detected,
**CHARACTERISED IN THAT** said subscription is configured with calling line identification restriction override (CLIRO).

2. A system according to claim 1, **CHARACTERISED IN THAT** the presence of the bypass (540, 840) can be detected if the received calling line identification (CLI) differs from the calling party number associated with the means (10) adapted to originate the test call.

3. A system according to claim 1, **CHARACTERISED IN THAT** the presence of the bypass (540) can be detected if the received calling line identification (CLI) belongs to a subscription to said telecommunication network (50) under test.

4. A system according to claim 3, **CHARACTERISED IN THAT** the presence of the bypass (540) can be detected if the received calling line identification (CLI) comprises a prefix which belongs to the numbering plan of said telecommunication network (50) under test.

5. A system according to claim 3, **CHARACTERISED IN THAT** the presence of the bypass (540) can be detected if the received calling line identification (CLI) comprises a number which is comprised in the number database of said telecommunication network (50) under test.

6. A system according to claim 1, **CHARACTERISED IN THAT** the presence of the bypass (540, 840) can be detected if the received calling line identification (CLI) comprises the same country code as the country code associated with said telecommunication network (50) under test.

7. A system according to claim 6, **CHARACTERISED IN THAT** the received calling line identification (CLI) belongs to a subscription to a telecommunication network (80) other than said telecommunication network (50) under test.

8. A method for detecting a bypass (100) of an interconnect (30) to a telecommunication network (50) under test, said method comprising the steps of:
• the means (10) originating a test call to said telecommunication network (50) under test from outside the telecommunication network (50) under test;
• the at least one receiver probe (20) with a subscription terminating said test call; and
• a control system (40) initiating the test call; receiving from the receiver probe (20) call information comprising a received calling line identification (CLI) of the test call; and analysing the received calling line identification (CLI) such that presence of the bypass (100) can be detected,
**CHARACTERISED IN THAT** said subscription is configured with calling line identification restriction override (CLIRO).

9. A method according to claim 8, said method further comprising the steps of initiating, originating, receiving and analysing a plurality of test calls between a plurality of means (10) and a plurality of predetermined receiver probes (20).

10. A method according to claim 9, said method further comprising the steps of:
• a scan phase wherein a first amount of the plurality of test calls is initiated at a first rate thereby identifying a bypass (100); and
• a shoot phase wherein a second amount of the plurality of test calls is initiated at a second rate only using predetermined means (10) and predetermined receiver probes (20) that are capable of passing through the bypass (100) identified in the scan phase, the second amount and rate being higher than the first amount and rate respectively.

11. A receiver probe for use in a system according to any of the claims 1 to 7, **CHARACTERISED IN THAT**, it comprises a subscription for terminating said test call and said subscription is configured with calling line identification restriction override (CLIRO).

12. A control system (40) for use in a system according to any of the claims 1 to 7,
**CHARACTERISED IN THAT** it is adapted to receive (20) call information comprising a received calling line identification (CLI) of a test call from a receiver probe comprising a subscription for terminating said test call, said subscription being configured with calling line identification restriction override (CLIRO).
